# EUROPÄISCHE PATENTSCHRIFT

(11) **EP 1 119 449 B1**
(45) Veröffentlichungstag und Bekanntmachung des Hinweises auf die Patenterteilung: **12.02.2003**
(21) Anmeldenummer: 00953154.2
(22) Anmeldetag: 04.08.2000
(51) Int. Cl.: B29C 45/04, B29C 45/16

(54) **ZWEI-PLATTEN- HORIZONTALSPRITZGIESSMASCHINE**
HORIZONTAL INJECTION MOLDING MACHINE WITH TWO DIE PLATES
PRESSE D'INJECTION HORIZONTALE AVEC DEUX PLATEAUX MATRICES

(30) Priorität: 06.08.1999 DE 19937200
(43) Veröffentlichungstag der Anmeldung: 01.08.2001
(60) Teilanmeldung: 02012663.7
(73) Patentinhaber: Krauss-Maffei Kunststofftechnik GmbH, 80997 München (DE)
(72) Erfinder: LICHTINGER, Peter, D-82256 Fürstenfeldbruck (DE)
(74) Vertreter: Zollner, Richard
(86) Internationale Anmeldenummer: EP0007562
(87) Internationale Veröffentlichungsnummer: WO01010624

(56) Entgegenhaltungen:
- EP-A- 0 794 045
- EP-A- 0 895 848
- DE-U- 8 509 642
- GB-A- 2 300 142
- US-A- 3 838 961
- US-A- 4 330 257
- PATENT ABSTRACTS OF JAPAN vol. 11, no. 250 (M-616), 14. August 1987 (1987-08-14) -& JP 62 060618 A (JAPAN STEEL WORKS LTD:THE), 17. März 1987 (1987-03-17)

## Beschreibung

Die Erfindung betrifft eine Zwei-Platten-Horizontalspritzgießmaschine gemäß dem Oberbegriff von Patentanspruch 1.

Aus dem Stand der Technik (US 4,330,257; EP 0 922 556 A1) sind Vorrichtungen zum Halten und Drehen von Formen oder Formteilen in einer Horizontalspritzgießmaschine bekannt, bei denen zwischen den Werkzeugaufspannplatten ein in Maschinenlängsrichtung verschiebbarer Drehblock (Werkzeugmittelplatte) als Formträger mit prismatischem Querschnitt vorgesehen ist, der um eine senkrecht auf der Maschinenlängsachse stehende Achse drehbar gelagert ist. Um den Drehblock einerseits in Maschinenlängsachse verschieben und andererseits um eine dazu senkrecht stehende Achse drehen zu können, ist ein System vorgesehen, bei dem der Drehblock in Trägern drehbar gelagert ist, wobei diese Träger wenigstens an den beiden unteren Holmen der Spritzgießmaschine (US 4,330,257) oder an allen vier Holmen (EP 0 922 556 A1) verschiebbar geführt und abgestützt ist. Damit hierbei eine präzise Führung des Trägers bzw. des daran angebrachten Drehblocks möglich ist, sind hochpräzise und in engen Toleranzen ausgelegte Stütz- und Führungselemente erforderlich, die systembedingt in großen Abständen zueinander angeordnet sind. Daher reagiert diese Abstützung empfindlich auf Temperaturschwankungen, d.h. bei Abkühlung und einer damit einhergehenden Schrumpfung wird das Spiel in den Lagern größer, während bei Erwärmung und einer damit einhergehenden Ausdehnung die Gefahr besteht, dass die Stütz- und Führungselemente auf den Holmen verklemmen. Um letzteres zu vermeiden, dürfen die Toleranzen in den Stütz- und Führungselementen nicht zu eng, d.h. nicht zu präzise ausgelegt werden. Weiterhin nachteilig ist, dass die Holme je nach Ausführung des Drehblocks und der Träger mit einem erheblichen Gewicht belastet werden (unzulässige Durchbiegung) und dass die bei der Rotation des Drehblocks auftretenden Drehmomente voll von den Holmen aufgenommen werden müssen, was gerade beim Anfahren und Abbremsen der Drehbewegung zu beachtlichen Belastungen führt.

Aus der US 3,838,961 ist eine Drei-Platten-Horizontalspritzgießmaschine bekannt, die die zuvor genannten Nachteile dadurch vermeidet, dass der Drehblock längsverschieblich an einer Traverse aufgehängt ist, die zum einen auf der festen Werkzeugaufspannplatte und zum anderen auf der Abstützplatte abgestützt und befestigt ist. Auf diese Weise hängt der Drehblock zwischen der festen Werkzeugaufspannplatte und der beweglichen Werkzeugaufspannplatte und die Holme der Drei-Platten-Horizontalspritzgießmaschine werden weder mit Gewichts- noch mit Drehmomenten belastet.

Aus der gattungsbildenen EP 0 794 045 A1 ist eine Zwei-Platten-Horizontalspritzgießmaschine bekannt, die über einen zwischen den Werkzeugaufspannplatten verfahrbaren Drehblock verfügt, dessen Gewicht auf dem Maschinenbett abgestützt ist. Auf der der festen Werkzeugaufspannplatte zugewandten Seite des Drehblocks ist an diesem ein erster Satz von Holmen befestigt, die in Schließzylinder einfahren können, die auf der Rückseite der festen Werkzeugaufspannplatte angebracht sind. Auf der der beweglichen Werkzeughälfte zugewandten Seite des Drehblocks ist ein zweiter Satz von Holmen bzw. Zugstangen befestigt, die durch die bewegliche Werkzeugaufspannplatte hindurchtauchen und deren Kolben in Schließzylindern mit einem Druckmittel beaufschlagt werden können, um die bewegliche Werkzeugaufspannplatte mit dem Drehblock auf Schließstellung zu fahren. Die Antriebswelle des Drehblocks ist doppelseitig gelagert und zwar auf zwei Drehblockträgern, die parallel zueinander in Maschinenlängsrichtung auf dem Maschinenbett abgestützt sind. Anstelle der in den Figuren 20, 21 und 24 der EP 0 794 045 A1 dargestellten horizontalen Anordnung kann auch eine vertikale Anordnung der beiden Drehblockträger mit dem sich dazwischen befindlichen Drehblock vorgesehen werden.

Nachteilig bei dieser Zwei-Platten-Horizontalspritzgießmaschine ist zum einen, dass die Holme mit den Drehmomenten des Drehblocks belastet werden, insbesondere beim Anfahren und beim Abbremsen des Drehblocks. Ausserdem ist die doppelseitige Lagerung ungünstig, da sie den Zugang zu den auf dem Drehblock aufgespannten Werkzeugen erschwert.

Ausgehend hiervon liegt der Erfindung die Aufgabe zugrunde, eine Zwei-Platten-Horizontalspritzgießmaschine mit einer Dreheinrichtung anzugeben, die die Nachteile der bekannten Zwei-Platten-Horizontalspritzgießmaschine vermeidet, bei der die Holme also weder mit Gewichts- noch mit Drehmomenten belastet sind. Eine weitere der Erfindung zugrundeliegende Aufgabe besteht darin, dass zum Einen das Werkzeug selbst im eingebauten Zustand von beiden Seiten und von oben gut zugänglich sein soll, was insbesondere beim Einlegen von zu umspritzenden Teilen oder bei der Fertigteilentnahme von Vorteil wäre, und dass zum Anderen das Werkzeug als Ganzes problemlos aus- und eingebaut werden kann, so dass ein aufwändiges Justieren der einzelnen Werkzeugteile entfallen kann.

Die Lösung dieser Aufgaben erfolgt durch eine Zwei-Platten-Horizontalspritzgießmaschine mit den Merkmalen von Patentanspruch 1. Vorteilhafte Ausgestaltungen und Weiterentwicklungen sind in den Unteransprüchen 2 bis 14 angegeben.

Der Hauptvorteil der vorliegenden Erfindung liegt darin, dass die Führung und die Lagerung der Dreheinrichtung vollständig von den Holmen losgelöst ist. Damit werden zum einen die Holme nicht unnötig belastet und zum anderen kann die Führung und Lagerung im Gegensatz zum Stand der Technik präzise ausgelegt werden. Die H-förmige Ausgestaltung der Grundplatte bietet außerdem mehrere Vorteile, nämlich eine stabile Abstützung, wenn die Schenkel des H entsprechend lang ausgelegt sind (Unteranspruch 12), sowie eine leichte Formteilentnahme in dem Freiraum zwischen den Schenkeln des H (Unteranspruch 5). Bei schweren Werkzeugmittelplatten ist es vorteilhaft, mehrere Linear- und/oder Gleitführungen vorzusehen (Unteranspruch 10) und/oder die Grundplatte derart groß auszulegen, dass sie bis außerhalb des Bereichs der Werkzeugaufspannplatten reicht (Unteranspruch 13). Mittels Transportlaschen und Ringschrauben kann ein komplettes Etagenwerkzeug im geschlossenen Zustand in den Bereich zwischen die Werkzeugaufspannplatten herabgelassen und auf den Drehteller montiert werden, wobei vorteilhafterweise Zentriermittel vorgesehen sind. Eine erfindungsgemäße Zwei-Platten-Horizontalspritzgießmaschine zeichnet sich ausserdem durch einen einfachen Werkzeugein- und -ausbau aus, wodurch der Werkzeugwechsel vereinfacht und beschleunigt wird. Das Öffnen der Werkzeughälften wird vorteilhaft durch hydraulische Abdrückzylinder in den Trennebenen zwischen dem Werkzeugmittelteil und der feststehenden bzw. der beweglichen Werkzeughälfte unterstützt (Unteranspruch 8).

Nachfolgend soll die Erfindung anhand eines Ausführungsbeispiels und unter Bezugnahme auf die Figuren 1 bis 7 näher erläutert werden. Es zeigen:
- Fig. 1:: Eine teilweise geschnittene Seitenansicht einer erfindungsgemäßen Spritzgießmaschine
- Fig. 2:: System zur Bewegung der Dreheinrichtung in Maschinenlängsachse;
- Fig.3:: schematische Darstellung des gesamten Werkzeugs mit Transportlaschen, Ringschrauben und Abdrückzylindern;
- Fig. 4:: eine Draufsicht auf die Dreheinrichtung;
- Fig. 5:: einen Schnitt entlang der Linie CD in Fig, 4, wobei die linke Hälfte die Ansicht in Richtung des Pfeiles A in Fig. 1 darstellt, während die rechte Hälfte die Ansicht in Richtung des Pfeils B in Fig. 1 darstellt;
- Fig.6:: eine Draufsicht auf das Antriebssystem für den Drehteller:
- Fig.7:: schematische Darstellung (in Seitenansicht) eines weiteren Verwendungszwecks für die Dreheinrichtung.

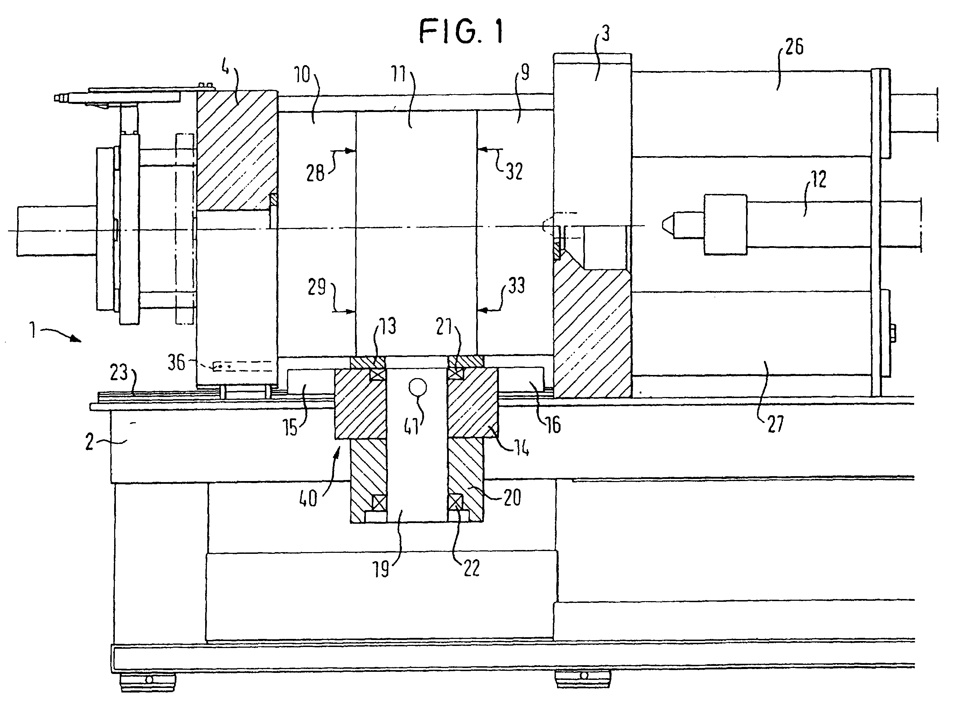

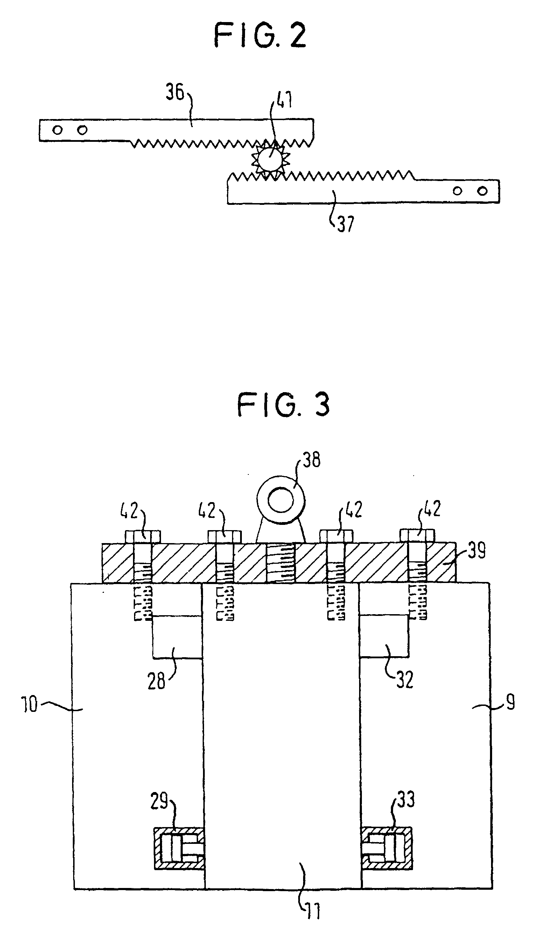

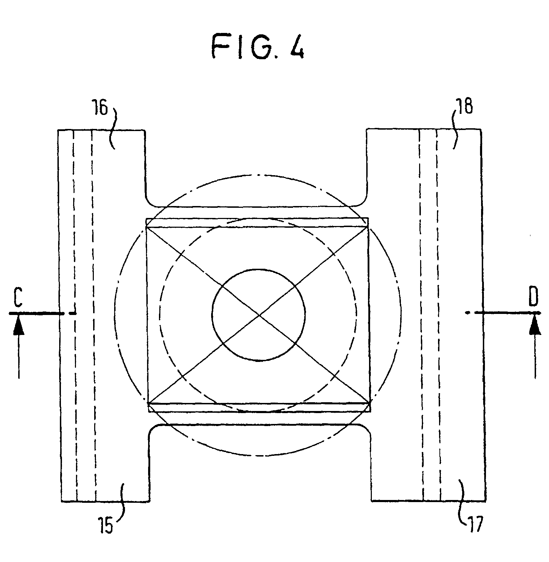

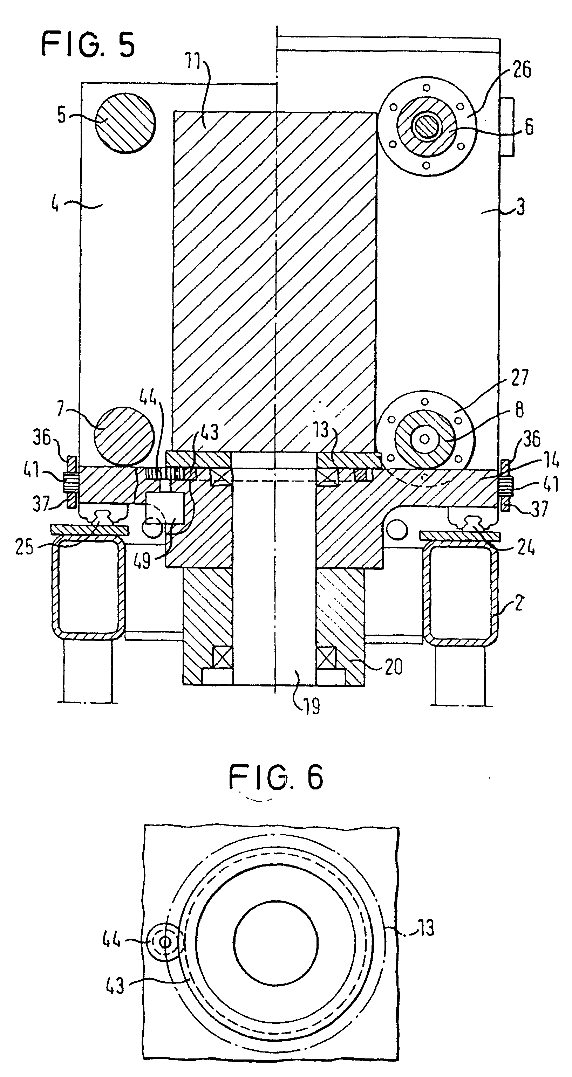

Nachfolgend wird die Erfindung anhand einer Zwei-Platten-Horizontalspritzgießmaschine mit einem Etagenwerkzeug und einer Werkzeugmittelplatte nachfolgend als Wendeplatte bezeichnet, näher beschrieben. Bei der in den Fig. 1 bis 6 dargestellten Spritzgießmaschine 1 sind auf einem Maschinenbett 2 eine feste Werkzeugaufspannplatte 3 und eine bewegliche, auf der Maschinenbettführung 23, 24 und 25 geführte und an Holmen 5 bis 8 gezogene, Werkzeugaufspannplatte 4 angeordnet. Zwischen den Werkzeugaufspannplatten sind eine feste Werkzeughälfte 9, eine bewegliche Werkzeughälfte 10 und zwischen diesen eine Wendeplatte 11 vorgesehen. Zwischen der festen Werkzeughälfte 9 und der dieser zugewandten Seite der Wendeplatte 11 wird die Takt-1-Etage gebildet, während zwischen der beweglichen Werkzeughälfte 10 und der dieser zugewandten Seite der Wendeplatte 11 die Takt-2-Etage vorgesehen ist. Die Takt-1-Einspritzung erfolgt durch ein der festen Werkzeughälfte zugeordnetes Spritzaggregat 12, während die Takt-2-Einspritzung durch ein an die bewegliche Werkzeughälfte 10 angesetztes L-Spritzaggregat (hier nicht dargestellt) erfolgt. Die Wendeplatte 11 ist auf einer Dreheinrichtung 40 befestigt und zwar auf einem, in der Regel rechteckigen, Drehteller 13, der auf einer H-förmigen Grundplatte 14 drehbar gelagert ist. Die Schenkel des H reichen bis nahe an die Werkzeugaufspannplatten heran, wie dies in Fig. 1 für die hinteren Schenkel 15 und 16 zu sehen ist. Bei schweren Mittelplatten können zusätzliche Führungen vorgesehen werden, auf denen die Grundplatte gelagert ist und die unter den Werkzeugaufspannplatten hindurch bis außerhalb von diesen reichen können. In diesem Fall sind die Schenkel der H-förmigen Grundplatte breiter ausgeführt oder es wird auf einer oder beiden Seiten der Wendeplatte auf den Raum zwischen den Schenkel des H mehr oder weniger stark verzichtet und die Grundplatte in diesem Bereich durchgängig ausgebildet. Ein von dem Drehteller 13 nach unten weisender Drehzapfen 19 (Rotor) ist in einem entsprechenden Stator 20 und der Grundplatte 14 drehbar gelagert. Der Antrieb des Drehtellers erfolgt mittels geeigneter Antriebsmittel, z.B. mittels Zahnkranz 43, Ritzel 44 und Hydro- oder Elektromotor 49 (siehe hierzu Fig.5 und 6). Die Grundplatte 14 ist auf stabilen Linearführungen 23 (oder auf Gleitführungen) auf dem Maschinenbett 2 gelagert. Hierzu verfügt das Maschinenbett über stabile Linearschienen oder Gleitführungen 24 und 25, in die die entsprechend gestaltete Unterseite der Grundplatte eingreift. In den Trennebenen der Takt-1 -Etage und der Takt-2-Etage sind jeweils vier Hydraulik-Zylinder 28 bis 35 symmetrisch angeordnet (siehe hierzu auch Fig.3 und 5). Diese erzeugen bei der Öffnungsbewegung einen parallelen, gleichzeitigen, kurzen Hub als zusätzliche Unterstützung für ein paralleles Auffahren des Werkzeugs. Die Längsbewegung der Dreheinrichtung 40 erfolgt mittels an den Werkzeugaufspannplatten auf beiden Seiten angelenkter Zahnstangen oder Steilgewinde-Spindeln 36,37, und an der Grundplatte angebrachter Zahnräder 41 (siehe hierzu Fig.2). Wie der Draufsicht gemäß Fig. 4 zu entnehmen ist, können fertiggestellte Formteile in den Freiraum zwischen des Schenkeln des H ausgestoßen und von einem - hier nicht dargestellten - darunter angeordneten Förderband abtransportiert werden. Es entfallen somit zusätzliche Handlingsysteme zur Formteilentnahme. Mittels Transportlaschen 39 und Ringschrauben 38 (siehe Fig.3) ist ein leichter Ein- und Ausbau des gesamten Werkzeugs als eine Einheit möglich. Die Werkzeugteile können aber auch separat ein- und ausgebaut werden, wenn auf jedem Werkzeugteil Ringschrauben 38 vorhanden sind und die Transportlaschen 39 gelöst sind. Zum Befestigen der Werkzeugmittelplatte auf dem Drehteller 13 sind in deren unteren Bereich eine oder mehrere Nuten und Bohrungen in dem auf dem Drehteller aufliegenden Teil vorgesehen, so dass Befestigungsschrauben durch diese Bohrungen in den Drehteller eingedreht werden können und die Schraubenköpfe über die Nuten zugänglich sind. Vorzugsweise sind in dem Drehteller nicht dargestellte Zentriermittel vorgesehen, um die Werkzeugmittelplatte sauber ausrichten zu können.

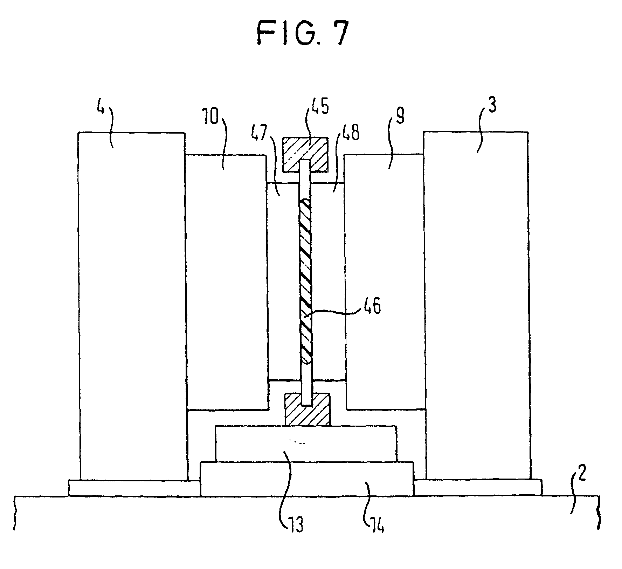

Auf der Dreheinrichtung können anstelle eines Formenträgers eines Etagenwerkzeuges auch sonstige Elemente angebracht werden. Beispielsweise kann gemäß Fig. 7 ein Halterahmen 45, d.h. ein sogenannter Indexrahmen oder eine sogenannte Indexplatte, für ein Formteil 46 vorgesehen werden, um ein Drehen dieses Formteils 46 von einem ersten Takt zu einem zweiten Takt zwischen den Werkzeughälften 9 und 10 zu ermöglichen,

### Bezugszeichenliste

- 1: Horizontalspritzgießmaschine
- 2: Maschinenbett
- 3: feste Werkzeugaufspannplatte
- 4: bewegliche Werkzeugaufspannplatte
- 5-8: Holme
- 9: feste Werkzeughälfte
- 10: bewegliche Werkzeughälfte
- 11: Wendeplatte
- 12: erstes Spritzaggregat
- 13: Drehteller
- 14: H-förmige Grundplatte
- 15,16: hintere Schenkel der H-förmigen Grundplatte
- 17,18: vordere Schenkel der H-förmigen Grundplatte
- 19: Drehzapfen
- 20: Stator
- 21,22: Kugel- oder Wälzlager
- 23: Linearführungen
- 24,25: Schienen
- 26,27: Zylinder für Bewegung der Holme 6 und 8 (entsprechende Zylinder gibt es - hier nicht gezeigt für die Holme 5 und 7)
- 28,29,30,31: Abdrückzylinder
- 32,33,34,35: Abdrückzylinder
- 36,37: Zahnstangen oder Steilgewinde-Spindeln
- 38: Ringschraube
- 39: Transportlasche
- 40: Dreheinrichtung
- 41: Zahnrad
- 42: Befestigungsschrauben
- 43: Zahnkranz
- 44: Ritzel
- 45: Indexrahmen bzw. Indexplatte
- 46: Spritzling (Produkt)
- 47,48: Formhälften
- 49: Hydro- oder Elektromotor

## Patentansprüche

1. Zwei-Platten-Horizontalspritzgießmaschine mit einer festen und mit einer beweglichen Werkzeugaufspannplatte, mit zwischen den beiden Werkzeugaufspannplatten verlaufenden Holmen, sowie mit einer zwischen den beiden Werkzeugaufspannplatten angeordneten und parallel zur Maschinenlängsachse verschiebbaren, um eine vertikale Achse drehbaren Dreheinrichtung für Spritzgießwerkzeuge,
**dadurch gekennzeichnet,**
**dass** die Dreheinrichtung eine Grundplatte (14) aufweist, dass auf der Grundplatte (14) ein um die vertikale Achse drehbar gelagerter Drehteller (13) angeordnet ist, dass Antriebsmittel (49) zum Drehen des Drehtellers (13) vorgesehen sind und dass die Dreheinrichtung von den Holmen (5, 6, 7, 8) losgelöst ist.

2. Horizontalspritzgießmaschine nach Anspruch 1,
**dadurch gekennzeichnet,**
**dass** zum Verschieben der Dreheinrichtung diese derart mit beiden Werkzeugaufspannplatten (3, 4) gekoppelt ist, dass bei der Bewegung der beweglichen Werkzeugaufspannplatte (4) die Dreheinrichtung mitbewegt wird, beispielsweise über Zahnstangen (36, 37), Spindein, insbesondere Steilgewindespindeln, oder Hydraulikzylinder.

3. Horizontalspritzgießmaschine nach Anspruch 1 oder 2,
**dadurch gekennzeichnet,**
**dass** die Dreheinrichtung separat von der beweglichen Werkzeugaufspannplatte (4) parallel zur Maschinenlängsachse verschiebbar ist, beispielsweise mittels Hydraulikzylindereinheiten.

4. Horizontalspritzgießmaschine nach einem der Ansprüche 1 bis 3,
**dadurch gekennzeichnet,**
**dass** auf dem Drehteller (13) das Mittelteil eines Etagenwerkzeugs befestigt ist, wobei das Mittelteil beispielsweise eine Mittelplatte (11) oder ein prismatischer Formenträger ist.

5. Horizontalspritzgießmaschine nach einem der Ansprüche 1 bis 4,
**dadurch gekennzeichnet,**
**dass** die Grundplatte (14) im wesentlichen H-förmig ausgebildet ist, und dass das Querstück der H-förmigen Grundplatte und der Drehteller derart ausgebildet sind, dass Formteile in dem Freiraum zwischen den Schenkeln (15, 16, 17, 18) des H nach unten fallen können.

6. Horizontalspritzgießmaschine nach einem der Ansprüche 1 bis 5,
**dadurch gekennzeichnet,**
**dass** Mittel zum Zentrieren des Mittelteils (11) auf dem Drehteller (13) vorgesehen sind.

7. Horizontalspritzgießmaschine nach einem der Ansprüche 1 bis 6,
**dadurch gekennzeichnet,**
**dass** auf dem Drehteller Mittel zum Halten von zwischen der festen und der beweglichen Hälfte eines auf den Werkzeugaufspannplatten (3, 4) aufgespannten Werkzeugs (47, 48) erzeugten Formteilen (46) vorgesehen sind, beispielsweise Halteleisten oder Halterahmen (45).

8. Horizontalspritzgießmaschine nach einem der Ansprüche 1 bis 7,
**dadurch gekennzeichnet,**
**dass** jeweils im Bereich der Trennebenen von Formhälften hydraulische Abdrückzylinder (28 - 35) vorgesehen sind, wobei in jeder Trennebene mindestens zwei, vorzugsweise vier Abdrückzylinder vorgesehen sind.

9. Horizontalspritzgießmaschine nach einem der Ansprüche 1 bis 8,
**dadurch gekennzeichnet,**
**dass** die Grundplatte (14) auf dem Maschinenbett (2) der Horizontalspritzgießmaschine gelagert ist.

10. Horizontalspritzgießmaschine nach einem der Ansprüche 1 bis 9,
**dadurch gekennzeichnet,**
**dass** mehrere Linear- und/oder Gleitführungen (23, 24, 25) vorgesehen sind, auf denen die Grundplatte (14) verschiebbar gelagert ist

11. Horizontalspritzgießmaschine nach einem der Ansprüche 1 bis 10,
**dadurch gekennzeichnet,**
**dass** für die Grundplatte (14) und die Werkzeugaufspannplatten (4) verschiedene Führungen vorgesehen sind.

12. Horizontalspritzgießmaschine nach einem der Ansprüche 1 bis 11,
**dadurch gekennzeichnet,**
**dass** die Grundplatte (14) in Maschinenlängsrichtung so weit reicht, dass bei geschlossenem Werkzeug zu jeder Werkzeugaufspannplatte (3, 4) der Horizontalspritzgießmaschine lediglich ein kleiner Abstand (Sicherheitsabstand) verbleibt.

13. Horizontalspritzgießmaschine nach einem der Ansprüche 1 bis 11,
**dadurch gekennzeichnet,**
**dass** die Grundplatte (14) in Maschinenlängsrichtung so lang ausgebildet ist, dass sie bei geschlossenem Werkzeug unter den Werkzeugaufspannplatten (3, 4) hindurch bis in den Bereich außerhalb der Werkzeugaufspannplatten (3, 4) reicht.

14. Horizontalspritzgießmaschine nach einem der Ansprüche 1 bis 13,
**dadurch gekennzeichnet,**
**dass** zum Antrieb ein Elektro- oder ein Hydromotor vorgesehen ist, mit dem ein Zahnrad antreibbar ist, das in einen am Drehteller vorgesehenen Zahnkranz eingreift.

## Claims

1. Horizontal injection moulding machine with two die plates comprising one fixed and one movable platen, columns extending between the two platens, and a rotary device for injection moulds which is rotatable about a vertical axis, can be displaced parallel to the longitudinal axis of the machine and is arranged between the two platens, **characterised in that** the rotary device comprises a base plate (14), **in that** a turntable (13) which is mounted rotatably about the vertical axis is arranged on the base plate (14), **in that** drive means (49) are provided to rotate the turntable (13) and **in that** the rotary device is detached from the columns (5, 6, 7, 8).

2. Horizontal injection moulding machine according to claim 1, **characterised in that** to displace the rotary device the rotary device is coupled to the two platens (3, 4) in such a way that when the movable platen (4) is moved the rotary device is also moved, for example via gear racks (36, 37), spindles, in particular steep-lead-angle threaded spindles, or hydraulic cylinders.

3. Horizontal injection moulding machine according to claim 1 or 2, **characterised in that** the rotary device can be displaced parallel to the longitudinal axis of the machine separately from the movable platen (4), for example by means of hydraulic cylinder units.

4. Horizontal injection moulding machine according to any one of claims 1 to 3, **characterised in that** the central part of a multi-daylight mould is fastened on the turntable (13), the central part being for example a central plate (11) or a prismatic mould carrier.

5. Horizontal injection moulding machine according to any one of claims 1 to 4, **characterised in that** the base plate (14) is formed substantially in an H-shape and **in that** the transverse piece of the H-shaped base plate and the turntable are formed in such a way that moulded parts can fall down in the free space between the arms (15, 16, 17, 18) of the H.

6. Horizontal injection moulding machine according to any one of claims 1 to 5, **characterised in that** means are provided for centring the central part (11) on the turntable (13).

7. Horizontal injection moulding machine according to any one of claims 1 to 6, **characterised in that** means are provided on the turntable for holding moulded parts (46) produced between the fixed and the movable half of a mould (47, 48) fixed on the platens (3, 4), for example holding strips or holding frames (45).

8. Horizontal injection moulding machine according to any one of claims 1 to 7, **characterised in that** hydraulic pressure cylinders (28 to 35) are respectively provided in the region of the parting planes of mould halves, at least two, preferably four pressure cylinders being provided in each parting plane.

9. Horizontal injection moulding machine according to any one of claims 1 to 8, **characterised in that** the base plate (14) is mounted on the machine base (2) of the horizontal injection moulding machine.

10. Horizontal injection moulding machine according to any one of claims 1 to 9, **characterised in that** a plurality of linear and/or sliding guides (23, 24, 25) is provided on which the base plate (14) is displaceably mounted.

11. Horizontal injection moulding machine according to any one of claims 1 to 10, **characterised in that** various guides are provided for the base plate (14) and the platens (4).

12. Horizontal injection moulding machine according to any one of claims 1 to 11, **characterised in that** the base plate (14) extends in the longitudinal direction of the machine to an extent such that when the mould is closed only a small distance (safety distance) remains from each platen (3, 4) of the horizontal injection moulding machine.

13. Horizontal injection moulding machine according to any one of claims 1 to 11, **characterised in that** the base plate (14) is formed with such a length in the longitudinal direction of the machine that when the mould is closed it reaches underneath the platens (3, 4) into the region outside the platens (3, 4).

14. Horizontal injection moulding machine according to any one of claims 1 to 13, **characterised in that** an electric or hydraulic motor is provided as a drive, with which a gear wheel engaging in a gear ring provided on the turntable can be driven.

## Revendications

1. Presse d'injection horizontale à deux plaques avec une plaque de serrage d'outil fixe et une plaque de serrage d'outil mobile, avec des longerons situés entre les deux plaques de serrage d'outil ainsi qu'avec un dispositif de rotation pour outils d'injection tournant autour d'un axe vertical, situé entre les deux plaques de serrage d'outil et mobiles parallèlement à l'axe longitudinal de la presse, **caractérisée en ce que** le dispositif de rotation comporte une plaque de fond (14), **en ce que** sur la plaque de fond (14) est disposé un plateau tournant (13) disposé de manière libre en rotation autour de l'axe vertical, **en ce que** des moyens d'entraînement (49) sont prévus pour la rotation du plateau tournant (13) et **en ce que** le dispositif de rotation est séparé des longerons (5, 6, 7, 8).

2. Presse d'injection horizontale selon la revendication 1, **caractérisée en ce que**, pour le déplacement du dispositif, celui-ci est couplé avec les deux plaques de serrage d'outil (3, 4) de telle sorte que, lors du déplacement de la plaque de serrage d'outil mobile (4) le dispositif de rotation est déplacé en même temps, par exemple grâce à des crémaillères (36, 37), des broches, en particulier des broches à pas rapide ou un vérin hydraulique.

3. Presse d'injection horizontale selon la revendication 1 ou la revendication 2, **caractérisée en ce que** le dispositif de rotation peut être déplacé indépendamment de la plaque de serrage d'outil mobile (4), par exemple à l'aide d'unités de vérins hydrauliques.

4. Presse d'injection horizontale selon une quelconque des revendications 1 à 3, **caractérisée en ce que**, sur le plateau tournant (13), la partie centrale d'un outil étagé est fixée, la partie centrale étant par exemple une plaque centrale (11) ou un support de forme prismatique.

5. Presse d'injection horizontale selon une quelconque des revendications 1 à 4, **caractérisée en ce que** la plaque de fond (14) est en forme de H et **en ce que** l'élément transversal de la plaque de fond en forme de H et le plateau tournant sont configurés de telle sorte que des pièces formées puissent tomber vers le bas dans l'espace libre entre les montants (15, 16, 17, 18) du H.

6. Presse d'injection horizontale selon une quelconque des revendications 1 à 5, **caractérisée en ce que** des moyens de centrage de la partie centrale (11) sont prévus sur le plateau tournant (13).

7. Presse d'injection horizontale selon une quelconque des revendications 1 à 6, **caractérisée en ce que**, sur le plateau tournant, des moyens sont prévus pour maintenir les pièces formées (46) produites par la moitié fixe et la moitié mobile d'un outil (47, 48) serré entre les plaques de serrage d'outil (3, 4), par exemple des barres de maintien ou un cadre de maintien (45).

8. Presse d'injection horizontale selon une quelconque des revendications 1 à 7, **caractérisée en ce qu'**au niveau des plans de séparation des moitiés formées, sont prévus des vérins pousseurs (28-35), au moins deux, de préférence quatre vérins pousseurs étant prévus.

9. Presse d'injection horizontale selon une quelconque des revendications 1 à 8, **caractérisée en ce que** la plaque de fond (14) est disposée sur le socle de la machine (2) de la presse d'injection horizontale.

10. Presse d'injection horizontale selon une quelconque des revendications 1 à 9, **caractérisée en ce que** plusieurs guides linéaires et/ou de coulissement (23, 24, 25) sont prévus, sur lesquels la plaque de fond (14) est disposée de manière mobile.

11. Presse d'injection horizontale selon une quelconque des revendications 1 à 10,
**caractérisée en ce que**, pour la plaque de fond (14) et les plaques de serrage d'outil (4), des guides sont prévus.

12. Presse d'injection horizontale selon une quelconque des revendications 1 à 11, **caractérisée en ce que** la plaque de fond (14) va aussi loin que, lorsque l'outil est fermé, il ne reste qu'un petit intervalle (intervalle de sécurité) avec chaque plaque de serrage d'outil (3, 4) de la presse d'injection horizontale.

13. Presse d'injection horizontale selon une quelconque des revendications 1 à 11, **caractérisée en ce que** la plaque de fond (14) est aussi longue dans le sens longitudinal de la machine que, lorsque l'outil est fermé, elle passe sous les plaques de serrage d'outil (3, 4) jusqu'à la zone extérieure des plaques de serrage d'outil (3, 4).

14. Presse d'injection horizontale selon une quelconque des revendications 1 à 13, **caractérisée en ce que**, pour l'entraînement, un moteur électrique ou hydraulique est prévu, entraînant une crémaillère qui s'engrène dans une crémaillère disposée sur le plateau tournant.
